# FASCICULE DE BREVET EUROPEEN

(11) **EP 0 732 579 B1**
(45) Date de publication et mention de la délivrance du brevet: **09.01.2002**
(21) Numéro de dépôt: 95401909.7
(22) Date de dépôt: 18.08.1995
(51) Int. Cl.: G01N 21/27, G01J 3/46, G01N 21/88, G01N 21/89

(54) **Procédé pour reconnaître et évaluer des défauts dans des couches superficielles partiellement réfléchissantes**
Verfahren zum Erkennen und Beurteilen von Fehlern in semi-reflektierender Oberflächenschicht
Method for recognizing and evaluating faults in semi-reflecting superficial film

(30) Priorité: 15.03.1995 DE 19509345
(43) Date de publication de la demande: 18.09.1996
(73) Titulaire: SAINT-GOBAIN GLASS FRANCE, 92400 Courbevoie (FR); VEGLA Vereinigte Glaswerke GmbH, 52066 Aachen (DE)
(72) Inventeur: Bongardt, Wolfgang, D-52146 Wûrselen (DE); Wilde, Ekkehard, D-51425 Bergisch Gladbach (DE); Lorek, Martin, D-52355 Dûren (DE)
(74) Mandataire: Renous Chan, Véronique

(56) Documents cités:
- DE-A- 4 309 802
- GB-A- 2 270 561
- US-A- 5 225 890
- PATENT ABSTRACTS OF JAPAN vol. 018, no. 162 (P-1712), 17 mars 1994 & JP 05 332838 A (IMAIZUMI SHOKAI:KK), 17 décembre 1993,

## Description

La présente invention concerne un procédé pour reconnaître et évaluer des défauts limités localement dans une couche superficielle sur un substrat transparent par traitement numérique de données d'une image fournie par une caméra vidéo.

Des feuilles de verre ci-après appelées "vitres" comportant un revêtement superficiel sélectivement réfléchissant sont utilisées comme vitres de protection solaire et/ou de vitres calorifuges. Les couches sélectivement réfléchissantes peuvent être appliquées selon différents procédés. De telles couches sont actuellement appliquées à grande échelle par le procédé de pulvérisation cathodique entretenu par un champ magnétique. Dans ce cas, une mince couche d'argent, qui est insérée entre d'autres couches, fait office la plupart du temps de couche fonctionnelle proprement dite. Une telle structure en couches comprend, en règle générale, une couche adhérente d'oxyde métallique, une couche d'argent, insérée entre des couches protectrices métalliques, et une couche de recouvrement d'oxyde métallique.

Dans le cas de tous les procédés de revêtement, des défauts de revêtement locaux plus ou moins étendus de différents types peuvent se produire. De tels défauts ne peuvent fréquemment pas être reconnus en transparence à travers la vitre revêtue, mais peuvent être principalement remarqués en réflexion, du fait qu'ils provoquent par exemple des changements de couleur localement limités. Puisque des vitres revêtues, à l'état installé peuvent toujours être vues également en réflexion, de tels défauts de revêtement doivent aussi être reconnus et des vitres dont le revêtement est défectueux doivent être éliminées. Cela s'effectuait jusqu'à présent exclusivement par jugement visuel, car des procédés automatiques satisfaisants n'existaient pas jusqu'à présent.

On admet que, lors de l'application des couches selon le procédé de pulvérisation cathodique, des perturbations dans le processus de revêtement lors de l'application des couches d'oxyde métallique sont la cause de tels défauts locaux. En particulier, dans le cas d'un taux de pulvérisation élevé, il peut se former, notamment sur les surfaces anodiques latérales à l'intérieur des chambres de pulvérisation, des couches de dépôt des oxydes métalliques électriquement isolantes qui provoquent l'apparition de décharges électriques depuis la surface de cible vers les surfaces anodiques latérales. Ainsi se forme localement un plasma particulièrement intensif qui crée les défauts de couches en forme de tache mentionnés.

L'invention a pour but de procurer un procédé automatique qui soit à même de reconnaître de manière sûre des défauts de couches en forme de tache de tout type et de les évaluer selon des critères objectifs. Le procédé doit permettre un jugement sûr des couches partiellement réfléchissantes et doit convenir pour une utilisation industrielle.

Ce but est atteint, conformément à l'invention, par le fait qu'on éclaire le substrat revêtu avec une lumière à large bande du domaine spectral visible, de préférence avec de la lumière blanche, et on utilise une caméra vidéo en couleurs comme caméra vidéo et par le fait qu'on réalise le traitement numérique de données en détectant, pour chaque point d'image, les valeurs de luminance pour chacune des trois couleurs primaires et en déterminant, par la division des valeurs de luminance de chaque couleur primaire par la somme des valeurs de luminance des trois couleurs primaires, la fraction de couleur relative pour chaque couleur primaire, dans chaque point d'image, puis en comparant les fractions de couleur relatives avec des valeurs de consigne prédéterminées.

L'invention prévoit également l'utilisation appropriée du traitement numérique de données dans le cas d'un système vidéo de mesure pour le jugement d'une couche superficielle sélectivement réfléchissante ou transparente, pour laquelle des exigences sévères concernant l'uniformité des couleurs en transmission et particulièrement en réflexion sont posées.

L'utilisation du traitement numérique de données dans le cas d'un système vidéo de mesure est connue, par exemple d'après le document GB-A-2 270 561 qui concerne un procédé de mesure d'épaisseur d'une couche sur un substrat ou de mesure de variation d'épaisseur. Le traitement des mesures dans ce document porte sur le calcul de la différence entre les signaux réfléchis de deux longueurs d'onde distinctes, ou bien sur le calcul de la moyenne des signaux réfléchis de longueurs d'onde différentes.

Il est aussi fondamentalement connu, à l'aide du traitement numérique des données dans le cas d'un système vidéo de mesure comportant un processeur, d'évaluer métrologiquement les signaux d'image fournis par la caméra de télévision, et, de cette manière, de détecter aussi des surfaces irrégulières de même que des différences de valeurs de luminosité et de couleur (messen + prüfen / automatik janvier/février 1977, pages 34-41). Il est cependant apparu que la détermination des couleurs par analyse d'image à l'aide d'une caméra vidéo en couleurs et le jugement de défauts de revêtement en forme de tache dans des couches superficielles de grande surface partiellement réfléchissante au moyen de ce procédé fondamentalement connu ne mène à des résultats utilisables que si l'on a tout d'abord calculé, à l'aide du procédé conforme à l'invention, à partir des valeurs de luminance mesurées des trois couleurs primaires, pour chaque point d'image, le quotient de la valeur de luminance mesurée de chaque couleur primaire par la somme des valeurs de luminance de toutes les couleurs primaires au niveau de ce point d'image, et si la fraction de couleur relative ainsi déterminée est à la base de l'évaluation ultérieure. De cette façon sont éliminées notamment des différences locales dans l'intensité d'éclairage, qui sont inévitables dans le cas de substrats revêtus de grande surface et qui se répercutent inévitablement dans les valeurs de luminance mesurées. Les fractions de couleur relatives ainsi obtenues sont aussi indépendantes de variations locales et de fluctuations locales et/ou temporaires de l'intensité d'éclairage et permettent un jugement hautement sensible de la couleur même dans le cas d'un éclairage variable et/ou irrégulier. On suppose cependant que la lumière frappant la couche superficielle à juger présente, dans le domaine du spectre visible, à tous les endroits de la couche à examiner, le même mélange des différentes longueurs d'onde comprises dans le spectre de la lumière, de sorte que l'éclairage seul ne peut pas être la cause du fait que des fractions de couleur relatives différentes des trois couleurs primaires soient mesurées.

Dans le cas où existe le danger que l'installation d'éclairage utilisée ne soit pas à même d'éclairer la couche superficielle sur toute la surface à juger avec une répartition localement constante des fractions de couleur, il est prévu, dans un développement de l'invention, de déterminer d'abord pour toute la surface à juger les fractions de couleur relatives qui dépendent du lieu sur un substrat présentant un revêtement superficiel sans défaut et de mémoriser les valeurs ainsi déterminées en tant que valeurs de référence, puis de mettre en rapport, dans le cas d'un éclairage identique, les fractions de couleur relatives qui dépendent du lieu déterminé sur le substrat revêtu à étudier avec les valeurs de référence qui dépendent du lieu mémorisé. De cette façon, il est alors possible d'éliminer non seulement des intensités d'éclairage différentes sur la surface à juger, mais aussi des répartitions spectrales différentes de l'éclairage.

Puisque des taches de couleur particulièrement faibles dans des couches superficielles de feuilles de verre sont moins gênantes en transparence qu'en réflexion, le procédé conforme à l'invention est utilisé de préférence pour l'évaluation de la lumière réfléchie. Dans ce cas, il est avantageux d'éclairer la plaque de verre revêtue du côté revêtu et de détecter la lumière réfléchie par l'interface air-couche superficielle au moyen de la caméra en couleurs. Mais il est aussi possible d'éclairer la feuille de verre revêtue sur la surface opposée à la couche et de détecter la lumière réfléchie par l'interface verre-couche superficielle ou couche surperficielle-air à travers la feuille de verre.

Fondamentalement, la caméra vidéo en couleurs détecte et évalue l'image par réflexion diffuse de la couche superficielle. L'image par réflexion diffuse peut être engendrée de différentes manières. Ainsi, il est possible, suivant une première forme de réalisation, d'éclairer la couche superficielle par une lumière dirigée selon un angle d'incidence oblique et de rendre la lumière réfléchie visible sur un écran de projection en tant que lumière réfléchie de manière diffuse, la caméra vidéo en couleurs détectant l'image visible sur l'écran de projection. Suivant une autre forme de réalisation, la lumière réfléchie de manière diffuse est directement détectée par la caméra vidéo en couleurs sur la couche superficielle ou sur le substrat, lorsque l'éclairage de la couche superficielle est assuré par de la lumière diffuse. Un éclairage de la couche superficielle par de la lumière diffuse est réalisé de différentes manières à l'aide de moyens connus.

Lorsque la caméra vidéo en couleurs est dirigée directement sur la couche superficielle ou sur le substrat revêtu, il convient de veiller à ce que la fraction des rayons lumineux qui ne sont pas directement attribuables à la lumière réfléchie au niveau de la couche superficielle soit réduite le plus possible. Cela peut être obtenu en observant le substrat revêtu sur un fond absorbant la lumière, par exemple, sur un fond noir.

Selon la grandeur de la surface à juger, une ou plusieurs caméras vidéo en couleurs peuvent être utilisées. Dans le cas du jugement d'une petite surface, par exemple une petite feuille de verre revêtue, on peut capter en même temps toute la surface à l'aide d'une seule caméra. Mais lorsque le procédé est utilisé, par exemple, au bout d'une installation de revêtement pour de grandes feuilles de verre, par exemple pour des feuilles de verre flotté longues de 6 m et larges d'environ 3 m, la mesure est effectuée de manière appropriée en utilisant simultanément plusieurs caméras vidéo en couleurs. Suivant une forme de réalisation préférée, une bande d'évaluation étroite s'étendant sur toute la largeur de la feuille de verre est observée et évaluée à de courtes distances successives à l'aide de plusieurs caméras vidéo en couleurs. De cette façon, les profils de luminance des trois couleurs primaires sur de courtes distances peuvent être établis et évalués sur toute la largeur de la feuille de verre, par exemple, dans le cas d'une disposition fixe des caméras vidéo, au-dessus d'un transporteur à rouleaux transportant la feuille de verre, et d'une progression continue de la feuille de verre revêtue. Lorsque la distance séparant réciproquement les bandes d'évaluation successives et les profils de luminance déterminés pour ces bandes d'évaluation, est, par exemple de quelques centimètres, toute la surface de la feuille de verre peut être étudiée à l'aide de ce procédé avec une précision suffisante au sujet des défauts de couleur mentionnés.

Lors de l'évaluation et du traitement numérique des signaux fournis par la caméra vidéo en couleurs elle-même ou par un étage de traitement d'image placé à la suite de la caméra vidéo en couleurs proprement dite pour les valeurs de luminance des trois couleurs primaires suivant le procédé conforme à l'invention, on peut en revenir à des méthodes de traitement et d'optimisation connues. Le signal couleur fourni par la caméra vidéo est habituellement décomposé dans les trois couleurs primaires rouge, vert et bleu, indépendamment du type de caméra correspondant. L'intensité de ces couleurs primaires, c'est-à-dire la valeur de luminance de chaque couleur primaire, est ensuite disponible pour le traitement ultérieur dans trois mémoires d'image distinctes pour chaque point d'image.

Cependant, avant la détermination de la fraction de couleur relative, des mesures de filtrage et d'optimisation sont prises de façon appropriée afin d'obtenir une évaluation optimale des valeurs de mesure.

Les mesures d'optimisation comprennent, en particulier, une transformation des valeurs de luminance, c'est-à-dire des valeurs d'intensité, et ce, avantageusement, de telle sorte que l'intervalle d'intensité observé de chaque couleur primaire soit étendu à l'ensemble du domaine d'intensité disponible de la mémoire d'image associée. Une telle transformation permet un jugement optimal du contraste de couleur ou des gradations de couleur existantes. Une transformation d'intensité peut être réalisée, par exemple, sous la forme d'une transformation linéaire de l'intervalle d'intensité entre la plus basse valeur et la plus haute valeur de luminance ou d'intensité mesurée sur l'ensemble du domaine d'intensité disponible de la mémoire d'image associée. De façon analogue, on peut aussi réaliser une transformation d'intensité suivant le procédé qualifié d'"égalisation à histogramme". De façon appropriée, cette transformation est entreprise directement au niveau du signal vidéo lui-même, c'est-à-dire avant la numérisation et la mémorisation de chaque valeur de luminance dans chaque mémoire d'image associée.

Les mesures de filtrage servent d'une manière connue en soi d'une part à l'antiparasitage, c'est-à-dire à l'augmentation du rapport signal utile/bruit, et d'autre part au moyennage et au lissage des signaux. Dans le cas du filtrage pour l'antiparasitage, il faut rechercher le compromis le plus favorable entre une déformation non souhaitée et l'antiparasitage effectif du signal d'origine. Puisqu'il s'agit du jugement de défauts de couleur d'étendue relativement grande, des opérations de moyennage sont efficaces et suffisantes pour les signaux présents.

Lors de l'exécution des mesures d'optimisation et de filtrage avant la détermination des fractions de couleur relatives, on peut, en principe, procéder de manière à effectuer tout d'abord la transformation d'intensité et à soumettre les signaux obtenus après la transformation au moyennage et à l'antiparasitage d'un filtrage local bidimensionnel. Mais il est aussi possible de filtrer en premier lieu les signaux fournis par la caméra vidéo en couleurs ou par l'étage de traitement d'image faisant suite à la caméra vidéo en couleurs, dans une étape de filtrage local bidimensionnel et ensuite de transformer les signaux filtrés et de les traiter davantage.

Après que la fraction de couleur relative dans chaque point d'image et donc la répartition de couleur locale dans le champ de mesure ont été déterminées pour les trois couleurs primaires à partir des signaux transformés et filtrés, il est simplement nécessaire de comparer les valeurs déterminées avec une valeur de norme définie. Cela peut, par exemple, se faire, dans le cas d'anomalies de couleur, en comparant la fraction de couleur relative déterminée avec une valeur de consigne qui est conforme à la fraction de couleur relative du milieu environnant sans défaut. Par contre, dans le cas où il y a une répartition de couleur inhomogène de l'éclairage à cause de la nature de l'installation d'éclairage, il convient, comme déjà mentionné plus haut, de déterminer et de mémoriser la répartition de couleur locale de l'image réfléchie de manière diffuse d'un revêtement superficiel sans défaut, et d'utiliser les valeurs mémorisées des fractions de couleur relatives en tant que valeurs de consigne pour la comparaison entre valeur de consigne et valeur effective.

Des particularités et des avantages supplémentaires de l'invention ressortiront des revendications et de la description suivante de différents exemples de réalisation basée sur les dessins.

Dans les dessins :
la Fig. 1 montre un montage approprié pour l'exécution du procédé comportant une mesure par réflexion indirecte;
la Fig. 2 est un schéma synoptique d'un circuit destiné à l'évaluation des signaux de luminance fournis par une caméra vidéo en couleurs;
la Fig. 3 montre le champ de mesure étroit capté par les caméras vidéo en couleurs, dans le cas du montage suivant la Fig. 1, sur l'écran de projection;
la Fig. 4 montre en représentation graphique les profils de luminance des trois couleurs primaires obtenus sur la largeur de la feuille de verre après le traitement des signaux numériques;
la Fig. 5 montre un autre montage pour l'exécution du procédé comportant une mesure par réflexion indirecte;
la Fig. 6 montre un montage pour l'exécution du procédé dans le cas d'une mesure par réflexion directe, et
la Fig. 7 montre un autre montage pour l'exécution du procédé dans le cas d'une mesure par réflexion directe.

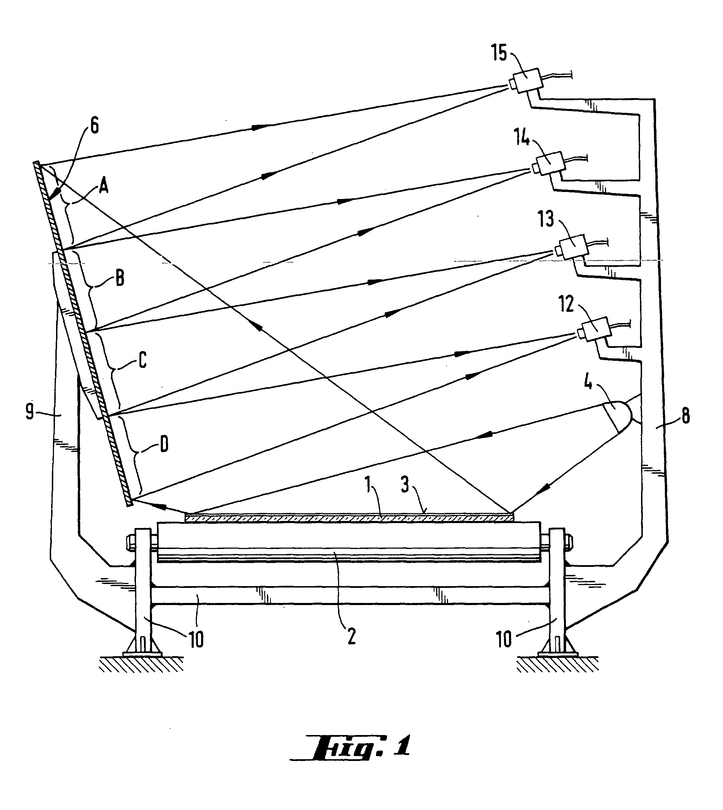

Dans le cas de la feuille de verre 1 représentée sur la Fig. 1, il s'agit par exemple, d'une feuille de verre flotté de 4 mm d'épaisseur présentant une largeur d'environ 3,2 m et une longueur de 6 m qui est transportée en position horizontale sur des rouleaux transporteurs 2. La feuille de verre 1 est pourvue sur sa face supérieure d'une couche 3 réfléchissant le rayonnement thermique, qui a été appliquée au moyen du procédé de pulvérisation cathodique entretenue par un champ magnétique. Pour l'éclairage de la feuille de verre revêtue 1, on utilise un projecteur de lumière 4, disposé latéralement au-dessus du plan de la feuille de verre, par lequel de la lumière blanche dirigée est projetée selon un angle d'incidence oblique sur la couche 3. Bien que l'angle d'incidence des rayons lumineux s'accroît inévitablement à mesure que l'éloignement de la zone éclairée par rapport au projecteur augmente, ce changement de l'angle d'incidence ne joue pas de rôle important pour la mesure tant que l'angle d'incidence du rayonnement ne dépasse pas environ 70°. Les déformations géométriques provoquées par l'angle d'incidence variable peuvent être compensées par calcul.

La lumière blanche provenant du projecteur de lumière 4 est réfléchie par la couche partiellement réfléchissante selon un angle de réflexion correspondant à l'angle d'incidence. Les rayons lumineux réfléchis sont visualisés sur un écran de projection plan comportant une surface blanche dispersive. Sur cet écran de projection 6 apparaissent, là où des défauts de couche locaux sont présents en des endroits correspondants de la couche 3, des taches colorées visibles dont les dimensions de surface, le cas échéant après prise en compte des déformations géométriques, correspondent aux dimensions des défauts de couche. Le projecteur 4 et l'écran de projection 6 sont montés de manière appropriée par l'intermédiaire de montants de fixation 8 ou 9 sur le bâti 10 du transporteur à rouleaux ou sont fixés en place d'une autre manière.

Quatre caméras vidéo en couleurs 12, 13, 14 et 15 sont montées les unes au-dessus des autres à l'aide de fixations appropriées sur le montant de fixation 8 au-dessus du projecteur de lumière 4. Ces caméras vidéo en couleurs 12 à 15 sont équipées chacune d'un objectif approprié et sont dirigées par leur axe optique perpendiculairement à l'écran de projection 6, de telle sorte que chaque caméra vidéo capte un quart de la hauteur totale de l'image apparaissant sur l'écran de projection 6, les quatre champs captés se chevauchant ou étant juxtaposés les uns contre les autres. De cette façon, les rayons lumineux réfléchis par la couche 3 sont captés sur l'écran de projection 6 sur toute la largeur de la feuille de verre 1.

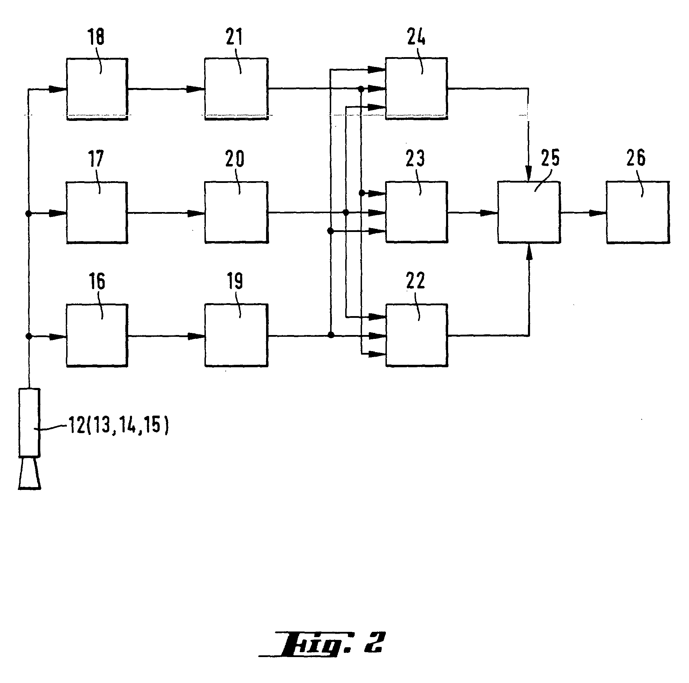

Les caméras vidéo en couleurs 12 à 15 sont installées de manière identique. A chaque caméra vidéo est relié un système de traitement d'image qui est représenté avec ses composants essentiels sous la forme d'un schéma synoptique sur la Fig. 2. Le système de traitement d'image vidéo en couleurs comprend la caméra vidéo en couleurs 12 (13, 14, 15) et à chaque fois un étage de numérisation vidéo en couleurs commandé par chaque caméra vidéo en couleurs. Pour chacune des trois couleurs primaires, il contient une mémoire d'image matricielle 16, 17, 18. Chaque mémoire d'image 16, 17, 18 mémorise pour chaque point d'image la valeur de luminance numérique de la couleur primaire correspondante du point d'image respectif dans le champ de vision de la caméra. Afin de pouvoir décrire la luminance des trois couleurs primaires, avec une précision suffisante, le domaine de luminosité à détecter dans son ensemble doit être subdivisé en un nombre suffisamment grand de niveaux de luminance. Le nombre des niveaux de luminance doit être d'au moins 64; de bons résultats sont obtenus lorsque par exemple 256 niveaux de luminosité ou de luminance sont disponibles pour la description de la luminance de chaque point d'image pris individuellement.

Dans le cas de la représentation choisie ici, chaque caméra vidéo en couleurs est pourvue d'un système de traitement d'image qui lui est propre. On peut cependant utiliser au lieu de cela un système de traitement d'image à grand rendement qui est à même de traiter simultanément les signaux fournis par toutes les caméras vidéo en couleurs. Le traitement des signaux eux-mêmes reste cependant fondamentalement identique.

Comme le montre le schéma synoptique de la Fig. 2, un étage d'optimisation et de filtrage 19, 20, 21 est commandé par les mémoires d'image 16, 17 et 18 qui fournissent chacune les signaux de luminance d'origine d'un champ défini. Ces étages d'optimisation et de filtrage 19, 20, 21 ont pour but de procéder à une transformation d'intensité des signaux de luminance et à un filtrage local bidimensionnel des signaux, afin de déparasiter et de lisser les signaux et de fournir une valeur moyenne représentative de la luminance d'une couleur dans un champ choisi. Les techniques de filtrage et de traitement des signaux nécessaires à cette fin sont connues et ne doivent donc pas être décrites en détail. Tandis que l'étage de filtrage et d'optimisation 19 fournit le profil de luminance, par exemple de la couleur rouge, composé des signaux traités, sur toute la largeur de l'image observée, l'étage de filtrage et d'optimisation 20 fournit le profil de luminance, par exemple pour la couleur verte, et l'étage de filtrage et d'optimisation 21 fournit le profil de luminance, par exemple pour la couleur bleue.

Les signaux fournis par les étages de filtrage et d'optimisation 19, 20, 21 sont acheminés vers les étages de division 22, 23, 24, les signaux des trois couleurs primaires étant fournis à chaque étage de division. Dans ces étages de division 22, 23, 24 a lieu la comparaison des valeurs de luminance des trois couleurs primaires avec la luminosité totale correspondante, donc avec la somme des valeurs de luminance des trois couleurs primaires. Suite à la division effectuée ici apparaît, à la sortie de l'étage de division 22, 23, 24 concerné, le signal de la fraction de la couleur relative de la couleur primaire correspondante.

Les signaux apparaissant à la sortie des étages de division 22, 23, 24 sont alors acheminés à un étage de comparaison de couleurs 25. Dans cet étage de comparaison de couleurs 25 a lieu la comparaison de couleurs de chaque couleur primaire à chaque endroit de l'image avec une valeur de consigne prédéterminée, la différence de couleur relative pour chaque couleur primaire étant chaque fois calculée à partir des valeurs de consigne et des valeurs effectives pour les fractions de couleur relatives.

Les signaux de différence obtenus par la comparaison de couleurs à la sortie de l'étage de comparaison de couleurs 25 sont acheminés à présent à un étage d'évaluation 26. Les valeurs limites admises, qui étaient déterminées auparavant sur base de jugements visuels, sont introduites dans cet étage d'évaluation 26. De préférence, pour chaque couleur primaire, une valeur limite inférieure et une valeur limite supérieure sont introduites dans ce cas pour les signaux de différence, c'est-à-dire pour la différence entre le signal de valeur de consigne et le signal de valeur effective, qui ne peuvent pas ne pas être dépassées ni par excès ni par défaut. Mais on peut aussi, au lieu de cela, établir la somme des valeurs absolues des signaux de différence des fractions de couleur relatives des trois couleurs primaires et comparer ce signal de somme avec une valeur limite supérieure qui ne peut pas être dépassée par excès. Lorsque les valeurs limites introduites sont dépassées par excès ou par défaut, l'étage d'évaluation 26 fournit un signal correspondant, de sorte que des couches défectueuses peuvent être de cette façon reconnues et le cas échéant éliminées.

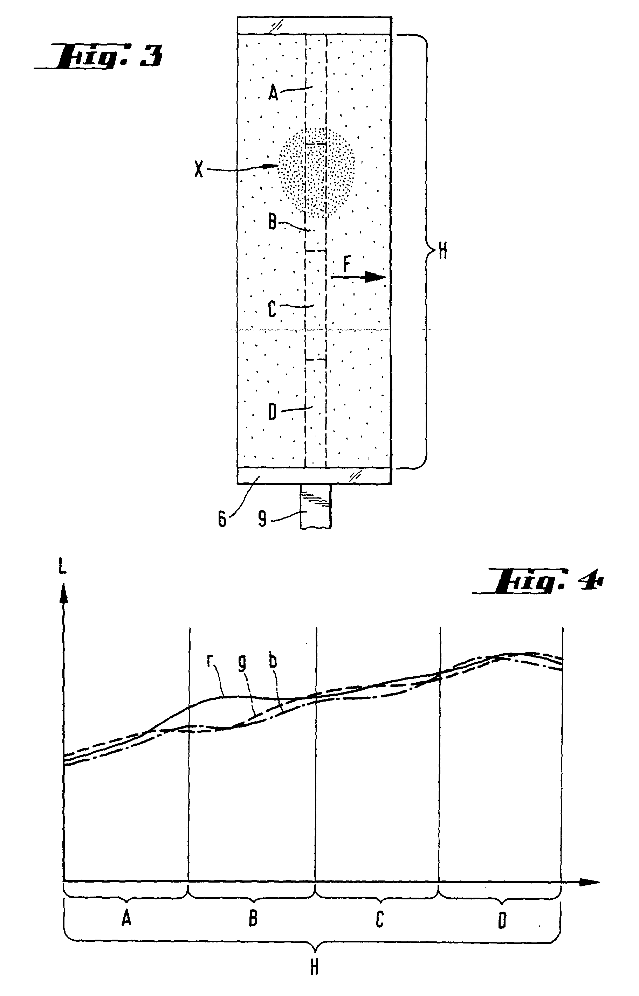

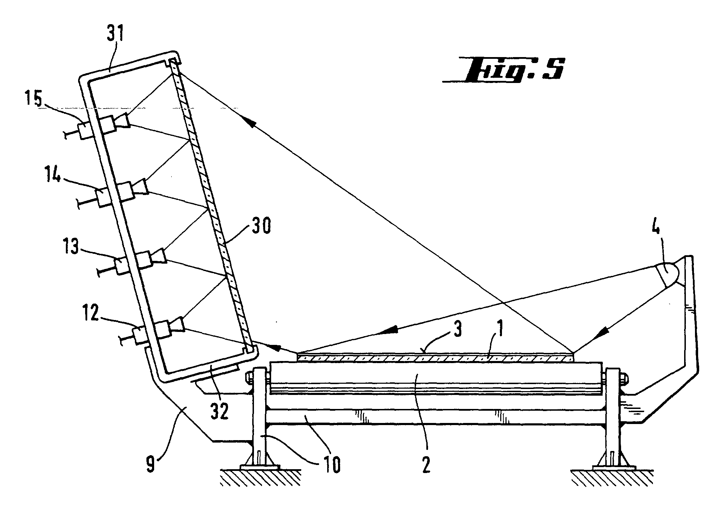

Le Fig. 3 illustre encore une fois le mode de fonctionnement du procédé, tandis que la Fig. 4 montre une possibilité de représentation des résultats de mesure. Pendant que la feuille de verre se déplace, par exemple, en position horizontale sur le transporteur à rouleaux (Fig. 1), l'image de réflexion produite par la couche 3, dans une zone entre deux rouleaux transporteurs, se déplace dans la direction de la flèche F sur l'écran de projection 6 qui peut avoir une dimension en largeur comparativement petite dans la direction de mouvement de la feuille de verre. Les quatre caméras vidéo captent sur l'écran de projection 6 une bande d'évaluation étroite, s'étendant sur toute la hauteur H de l'image projetée, subdivisée en quatre zones A, B, C et D qui sont attribuées aux caméras vidéo en couleurs individuelles. L'évaluation est réalisée en enregistrant le champ de mesure simultanément au moyen des quatre caméras vidéo en couleurs avec un temps de pose court à de brefs intervalles de temps. L'image enregistrée est mémorisée dans chaque système de traitement d'image et est évaluée comme décrit sur la base de la Fig. 2. Lorsque la feuille de verre a progressé de quelques centimètres, la prise de vues suivante est réalisée simultanément avec les quatre caméras vidéo en couleurs, y compris la mémorisation et l'évaluation subséquente des images vidéo. De cette façon, toute la feuille de verre peut être captée et évaluée en bandes transversales successives.

Si on travaille avec des caméras matricielles, le domaine capté par prise de vues dans la direction de mouvement de la feuille de verre peut valoir jusqu'à 160 cm. Elle peut alors être subdivisée lors du traitement de l'image en bandes d'évaluation, larges de quelques centimètres, s'étendant dans la direction transversale, et être évaluée de la façon décrite. Si on travaille avec des caméras à lignes au lieu de caméras matricielles, on doit procéder aux prises de vues à des distances de quelques millimètres afin de pouvoir procéder au filtrage local nécessaire sous forme de bandes d'évaluation.

Si on trace la valeur de luminance L obtenue lors d'une prise de vues avec les quatre caméras vidéo en couleurs après le traitement des signaux vidéo pour les trois couleurs primaires sur la largeur H de la feuille de verre, on obtient un diagramme, tel que représenté sur la Fig. 4. Tant que la lumière réfléchie et captée par les caméras vidéo en couleurs est blanche ou neutre au point de vue des couleurs, les trois courbes de luminance r (rouge), g (vert) et b (bleu) évoluent de façon plus ou moins proche parallèlement les unes aux autres ou se superposent dans le cas idéal. La hauteur absolue des courbes de luminance, dans les conditions d'éclairage de la pratique, n'est pas constante, la luminance sur l'écran de projection, dans le cas du montage décrit ici, étant plutôt nettement inférieure dans le champ A à cause du plus grand éloignement de la feuille de verre revêtue et allant en augmentant de façon continue jusqu'à l'extrémité du champ D.

Cette évolution de la luminance de la lumière blanche est sans importance pour l'évaluation. Seul importe ici le fait que des variations des fractions de couleur relatives soient reconnues. Dans l'exemple représenté, dans lequel l'image de projection présente une légère tache de couleur rouge dans la zone X, la courbe de luminance r pour la couleur rouge s'accroît clairement dans les champs A, B, correspondants, tandis que les courbes de luminance g pour le vert et b pour le bleu diminuent quelque peu. La fraction de couleur de la couleur primaire rouge augmente donc, tandis que la fraction de couleur des couleurs primaires vert et bleu diminue. Dans le cas d'un étalonnage et d'un réglage correspondant des valeurs de consigne pour les fractions de couleur relatives, des renseignements clairs sur la qualité du revêtement peuvent être obtenus.

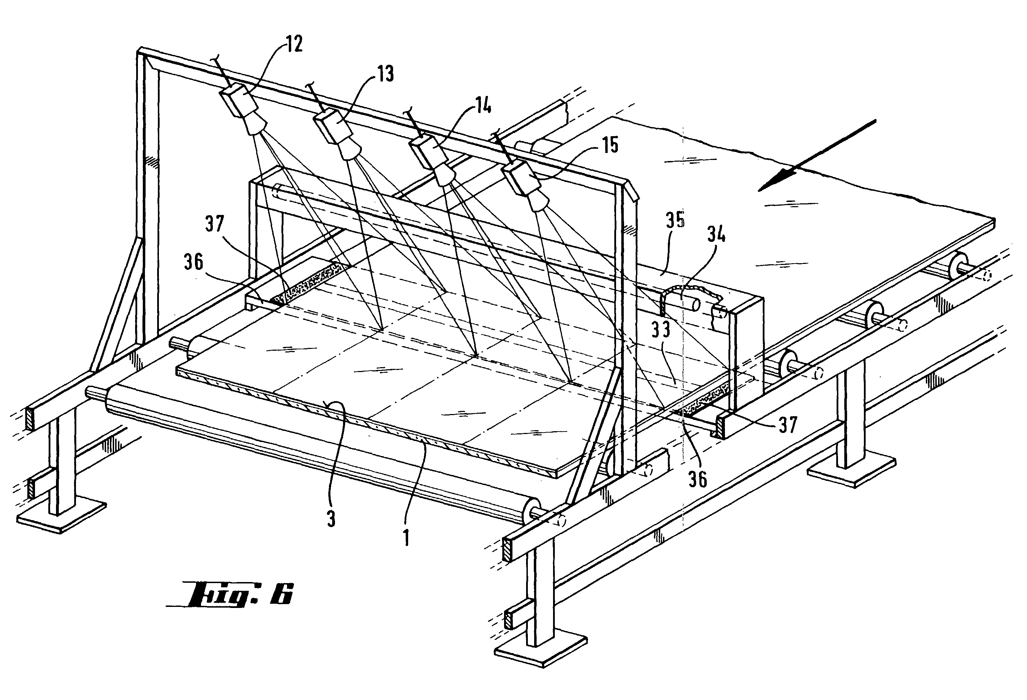

Une autre forme de réalisation pour un montage à mesure par réflexion indirecte est représentée sur la Fig. 5. Il s'agit ici aussi à nouveau de l'évaluation de défauts de couleur dans une couche superficielle transparente 3 sur une grande feuille de verre 1 qui traverse un champ de mesure transversal à la direction d'avancement de la feuille de verre 1 sur les rouleaux transporteurs 2 d'un transporteur à rouleaux. Dans ce cas aussi, l'éclairage de la couche superficielle 3 dans le champ de mesure est réalisé au moyen d'un projecteur dirigé 4, qui dirige les rayons lumineux sur la couche superficielle obliquement selon des angles compris entre 40 et 60° par rapport à la normale. Les rayons lumineux réfléchis au niveau de la couche superficielle frappent l'écran de projection, qui est constitué dans ce cas d'une vitre dispersive 30, par exemple une vitre en verre opale ou opaque. La vitre dispersive 30 est fixée par l'intermédiaire des montants 31, 32 à un support 9 qui est monté sur le bâti 10 du transporteur à rouleaux. A l'intérieur de la vitre opale 30, les rayons lumineux qui frappent la vitre opale 30 sont dispersés dans toutes les directions, de sorte que la représentation rayonnant de manière diffuse de l'image réfléchie peut être captée sur l'arrière de la vitre opale 30 à l'aide des caméras vidéo en couleurs 12 à 15. Le traitement numérique des signaux fournis par les caméras vidéo en couleurs 12 à 15 est réalisé de la même manière que celle qui a été décrite avec référence aux Fig. 1 à 4.

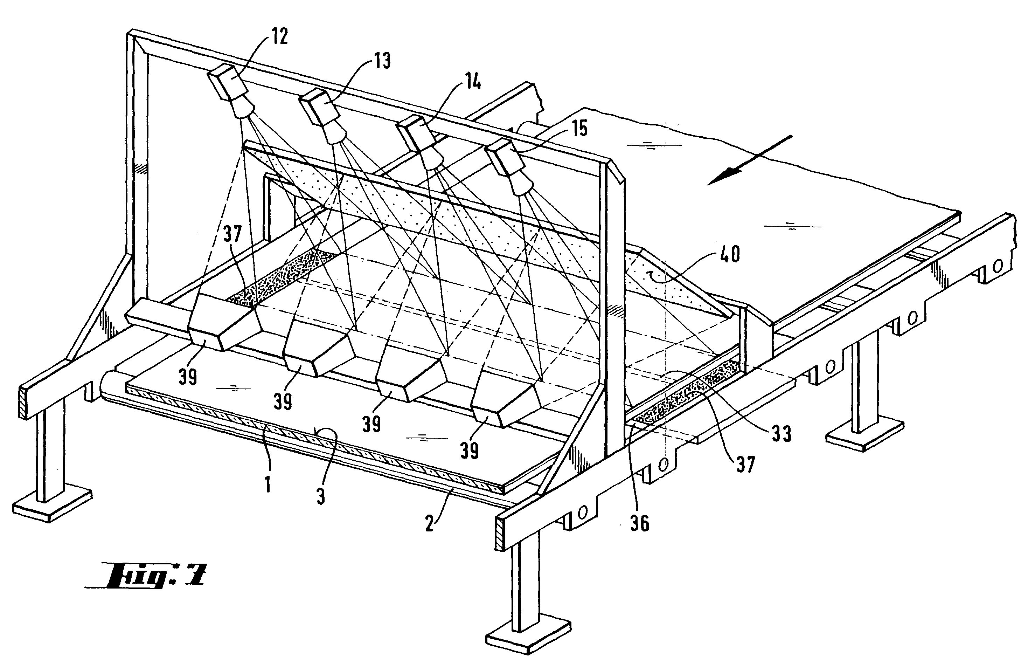

Les Fig. 6 et 7 montrent deux exemples de réalisation pour des mesures par réflexion directe, c'est-à-dire pour la détection et l'évaluation directe de l'image en couleurs apparaissant sur la couche superficielle, lors d'un éclairage de la couche superficielle avec de la lumière diffuse, ces deux exemples de réalisation se distinguant par le type d'éclairage. Dans les deux cas, il s'agit à nouveau d'une feuille de verre flotté 1, pourvue d'une couche superficielle 3 partiellement réfléchissante, qui est transportée sur des rouleaux transporteurs 2 et est examinée pendant le transport pour déceler des défauts de couleur dans la couche superficielle. Au-dessus du transporteur à rouleaux sont montées sur un support approprié, entre deux rouleaux transporteurs 2 successifs, transversalement par rapport à la direction de transport de la feuille de verre, quatre caméras vidéo en couleurs 12, 13, 14, 15, à l'aide desquelles un champ s'étendant sur toute la largeur est à nouveau capté et, à l'intérieur de ce champ, une bande d'évaluation 33 étroite, par exemple large d'environ 3 cm, est évaluée. L'évaluation des signaux fournis par les caméras vidéo en couleurs 12 à 15 pour les trois couleurs primaires est à nouveau réalisée suivant la méthode décrite.

Dans le cas de la forme de réalisation représentée sur la Fig. 6, l'éclairage diffus est réalisé à l'aide d'un tube fluorescent 34, qui est disposé au-dessus de la feuille de verre 1, parallèlement à celle-ci et transversalement à la direction de transport de la plaque de verre. Le tube fluorescent 34 est protégé vers le haut au moyen d'un boîtier 35. La lumière diffuse ainsi obtenue frappe directement la couche superficielle 3 et elle produit une bande lumineuse s'étendant transversalement sur la feuille de verre. Afin d'empêcher que ne se superpose à l'image de réflexion apparaissant sur la couche superficielle 3, la lumière qui traverse la couche superficielle 3 et la feuille de verre 1, qui est réfléchie en dessous de la feuille de verre et qui retraverse la feuille de verre 1 et la couche 3, une plaque 36, dont la surface est pourvue d'un revêtement 37 noir absorbant la lumière, est disposée en dessous de la feuille de verre 1 dans la zone du champ de mesure.

Egalement dans le cas du montage illustré de la Fig. 7, une plaque 36 comportant un revêtement 37 noir absorbant la lumière est disposée en dessous de la feuille de verre 1 dans la zone du champ de mesure, afin d'empêcher une superposition de l'image de réflexion de la couche superficielle 3 par la réflexion de lumière en dessous de la feuille de verre 1. L'éclairage diffus de la couche superficielle 3 est réalisé dans ce cas de manière indirecte à l'aide des projecteurs 39, qui sont dirigés vers une paroi de dispersion 40 disposée de préférence de manière inclinée au-dessus de la feuille de verre transversalement à la direction de transport. La paroi de dispersion 40 présente une surface dispersive blanche, de sorte que de la lumière diffuse est réfléchie par cette paroi dispersive. La fraction de cette lumière diffuse frappant la couche superficielle 3 assure l'éclairage diffus de la couche et permet à nouveau l'observation indirecte de la couche par les caméras vidéo en couleurs.

## Revendications

1. Procédé pour reconnaître et évaluer des défauts limités localement dans une couche superficielle sur un substrat transparent par traitement numérique de données d'une image fournie par une caméra vidéo, **caractérisé en ce qu'**on éclaire le substrat revêtu avec une lumière à large bande du domaine spectral visible, de préférence avec de la lumière blanche, et on utilise une caméra vidéo en couleurs comme caméra vidéo, et **en ce qu'**on effectue le traitement numérique de données en détectant, pour chaque point d'image, les valeurs de luminance pour chacune des trois couleurs primaires et en déterminant, par la division des valeurs de luminance de chaque couleur primaire par la somme des valeurs de luminance des trois couleurs primaires, la fraction de couleur relative pour chaque couleur primaire dans chaque point d'image, puis en comparant les fractions de couleur relatives avec valeurs de consigne prédéterminées.

2. Procédé suivant la revendication 1, **caractérisé en ce que**, dans le cas d'un éclairage de la couche superficielle à juger présentant une répartition localement constante des fractions de couleur de la lumière, les fractions de couleur relatives déterminées sont directement comparées aux valeurs de consigne de référence constantes sur la surface de la couche superficielle.

3. Procédé suivant la revendication 1, **caractérisé en ce que**, dans le cas d'un éclairage de la couche superficielle à juger présentant une répartition variant localement des fractions de couleur de la lumière, les fractions de couleur relatives dépendant du lieu sur un substrat comportant un revêtement superficiel sans défaut sont déterminées et mémorisées, et **en ce que** les fractions de couleur relatives dépendant du lieu, déterminées au niveau de la couche superficielle à juger, sont comparées avec les fractions de couleur relatives dépendant du lieu mémorisées en tant que valeurs de consigne de référence.

4. Procédé suivant l'une quelconque des revendications 1 à 3, **caractérisé en ce que** la lumière réfléchie au niveau de la couche superficielle est enregistrée et évaluée par la caméra vidéo en couleurs.

5. Procédé suivant la revendication 4, **caractérisé en ce que** le substrat revêtu est éclairé du côté pourvu de la couche superficielle.

6. Procédé suivant la revendication 4, **caractérisé en ce que** le substrat revêtu est éclairé du côté opposé à la couche superficielle.

7. Procédé suivant l'une quelconque des revendications 1 à 6, **caractérisé en ce que** le substrat revêtu est éclairé par de la lumière dirigée sous un angle d'incidence oblique, que la lumière réfléchie par la couche superficielle est visualisée sur un écran de projection et que l'image se réfléchissant de manière diffuse qui apparaît sur l'écran de projection est captée et évaluée par la caméra vidéo en couleurs.

8. Procédé suivant la revendication 7, **caractérisé en ce que** le substrat revêtu est éclairé sous un angle d'incidence allant de 0 à 70°, et de préférence de 20 à 60°.

9. Procédé suivant la revendication 7 7 ou 8, **caractérisé en ce qu'**un écran opaque est utilisé comme écran de projection.

10. Procédé suivant la revendication 7 ou 8, **caractérisé en ce qu'**une plaque mate translucide est utilisée comme écran de projection et l'image visible sur la plaque mate est captée et évaluée en tant qu'image de transmission.

11. Procédé suivant l'une quelconque des revendications 1 1 à 6, **caractérisé en ce que** le substrat revêtu est éclairé avec de la lumière diffuse et que la lumière réfléchie par la couche superficielle est directement captée et évaluée par la caméra vidéo en couleurs.

12. Procédé suivant la revendication 11, **caractérisé en ce que** la détection et l'évaluation par la caméra vidéo en couleurs de la lumière réfléchie par la couche superficielle est réalisée sur un fond absorbant la lumière, de préférence un fond noir.

13. Procédé suivant l'une quelconque des revendications 1 à 12, **caractérisé en ce que** les signaux de valeur de luminance de chaque point d'image dans chacune des couleurs primaires sont soumis avant la détermination des fractions de couleur relatives à une transformation d'intensité en vue d'une exploitation optimale du contraste de couleur.

14. Procédé suivant la revendication 13, **caractérisé en ce que** la transformation d'intensité des signaux de luminance s'effectue directement sur le signal vidéo de la caméra avant la mémorisation des signaux dans le système de traitement d'image.

15. Procédé suivant la revendication 13 ou 14, **caractérisé en ce qu'**à titre de transformation d'intensité, une transformation linéaire de l'intervalle d'intensité entre la valeur de luminosité la plus haute et la valeur la plus basse mesurée sur la totalité du domaine d'intensité disponible de la mémoire d'image est effectuée.

16. Procédé suivant la revendication 13 ou 14, **caractérisé en ce que** le procédé connu qualifié d'"égalisation à histogramme" est utilisé comme transformation d'intensité.

17. Procédé suivant l'une quelconque des revendications 1 à 16, **caractérisé en ce que** les signaux fournis par la caméra vidéo en couleurs ou par l'étage de traitement d'image placé à sa suite ou les signaux optimisés par la transformation d'intensité pour la luminance dans chaque couleur primaire sont soumis à un filtrage, passe-haut, passe-bas ou passe-bande, bidimensionnel, qui dépend du lieu avant la détermination des fractions de couleur relatives.

18. Procédé suivant l'une quelconque des revendications 1 à 17, **caractérisé en ce que**, dans le cas de l'évaluation d'un substrat étendu, par exemple d'une feuille de verre revêtue après le revêtement dans une installation de revêtement en continu, la surface revêtue est observée simultanément à l'aide de plusieurs caméras vidéo qui sont chacune assignées à une zone partielle de la surface revêtue.

19. Procédé suivant l'une quelconque des revendications 1 à 18, **caractérisé en ce qu'**une zone, en forme de bande s'étendant sur la largeur du substrat, du substrat revêtu, est captée et évaluée.

## Patentansprüche

1. Verfahren zum Erkennen und Bewerten von örtlich begrenzten Farbfehlern in einer Oberflächenschicht auf einem transparenten Substrat durch digitale Datenverarbeitung eines von einer Videokamera gelieferten Bildes, **dadurch gekennzeichnet, dass** das beschichtete Substrat mit breitbandigem Licht des sichtbaren Spektralbereichs, vorzugsweise mit weißem Licht, beleuchtet und als Videokamera eine Farbvideokamera verwendet wird, und dass die digitale Datenverarbeitung in der Weise erfolgt, dass für jeden Bildpunkt die Leuchtdichtewerte für jede der drei Grundfarben ermittelt und durch Division der Leuchtdichtewerte jeder Grundfarbe durch die Summe der Leuchtdichtewerte aller drei Grundfarben der relative Farbanteil für jede Grundfarbe in jedem Bildpunkt bestimmt wird und die relativen Farbanteile mit vorgegebenen Sollwerten verglichen werden.

2. Verfahren nach Anspruch 1, **dadurch gekennzeichnet, dass** bei einer Beleuchtung der zu beurteilenden Oberflächenschicht mit örtlich konstanter Verteilung der Farbanteile des Lichts die ermittelten relativen Farbanteile unmittelbar mit über die Fläche der Oberflächenschicht gleichbleibenden Referenz-Sollwerten verglichen werden.

3. Verfahren nach Anspruch 1, **dadurch gekennzeichnet, dass** bei einer Beleuchtung der zu beurteilenden Oberflächenschicht mit örtlich sich ändernder Verteilung der Farbanteile des Lichts die ortsabhängigen relativen Farbanteile an einem Substrat mit fehlerfreier Oberflächenbeschichtung ermittelt und abgespeichert werden, und dass die an der zu beurteilenden Oberflächenschicht ermittelten ortsabhängigen relativen Farbanteile mit den abgespeicherten ortsabhängigen relativen Farbanteilen als Referenz-Sollwerten verglichen werden.

4. Verfahren nach einem der Ansprüche 1 bis 3, **dadurch gekennzeichnet, dass** von der Farbvideokamera das an der Oberflächenschicht reflektierte Licht aufgenommen und ausgewertet wird.

5. Verfahren nach Anspruch 4, **dadurch gekennzeichnet, dass** das beschichtete Substrat auf der mit der Oberflächenschicht versehenen Seite beleuchtet wird.

6. Verfahren nach Anspruch 4, **dadurch gekennzeichnet, dass** das beschichtete Substrat auf der der Oberflächenschicht gegenüberliegenden Seite beleuchtet wird.

7. Verfahren nach einem der Ansprüche 1 bis 6, **dadurch gekennzeichnet, dass** das beschichtete Substrat mit gerichtetem Licht unter schrägem Einfallswinkel beleuchtet, das von der Oberflächenschicht reflektierte Licht auf einem Projektionsschirm sichtbar gemacht, und das auf dem Projektionsschirm entstehende diffus reflektierende Bild von der Farbvideokamera erfaßt und ausgewertet wird.

8. Verfahren nach Anspruch 7, **dadurch gekennzeichnet, dass** das beschichtete Substrat unter einem Einstrahlungswinkel von Null bis 70 Grad, und vorzugsweise von 20 bis 60 Grad, beleuchtet wird.

9. Verfahren nach Anspruch 7 oder 8, **dadurch gekennzeichnet, dass** als Projektionsschirm ein lichtundurchlässiger Schirm verwendet wird.

10. Verfahren nach Anspruch 7 oder 8, **dadurch gekennzeichnet, dass** als Projektionsschirm eine lichtdurchlässige Mattscheibe verwendet und das auf der Mattscheibe sichtbare Bild als Transmissionsbild erfaßt und ausgewertet wird.

11. Verfahren nach einem der Ansprüche 1 bis 6, **dadurch gekennzeichnet, dass** das beschichtete Substrat mit diffusem Licht beleuchtet, und dass das von der Oberflächenschicht reflektierte Licht von der Farbvideokamera unmittelbar erfaßt und ausgewertet wird.

12. Verfahren nach Anspruch 11, **dadurch gekennzeichnet, dass** die Erfassung und Auswertung des von der Oberflächenschicht reflektierten Lichts durch die Farbvideokamera gegen einen lichtabsorbierenden, vorzugsweise gegen einen schwarzen, Hintergrund erfolgt.

13. Verfahren nach einem der Ansprüche 1 bis 12, **dadurch gekennzeichnet, dass** die Signale für den Leuchtdichtewert jedes Bildpunktes in jeder Grundfarbe vor der Ermittlung der relativen Farbanteile zur optimalen Ausnutzung des Farbkontrastes einer Intensitäts-Transformation unterzogen werden.

14. Verfahren nach Anspruch 13, **dadurch gekennzeichnet, dass** die Intensitäts-Transformation der Leuchtdichte-Signale unmittelbar am Video-Signal der Kamera vor dem Einspeichern der Signale in das Bildverarbeitungssystem erfolgt.

15. Verfahren nach Anspruch 13 oder 14, **dadurch gekennzeichnet, dass** als Intensitäts-Transformation eine lineare Transformation des Intensitätsintervalls zwischen dem höchsten und dem niedrigsten gemessenen Leuchtdichtewert auf den insgesamt zur Verfügung stehenden Intensitätsbereich des Bildspeichers vorgenommen wird.

16. Verfahren nach Anspruch 13 oder 14, **dadurch gekennzeichnet, dass** als Intensitäts-Transformation das als "Histogram Equalization" bekannte Verfahren angewendet wird.

17. Verfahren nach einem oder mehreren der Ansprüche 1 bis 16, **dadurch gekennzeichnet, dass** die von der Farbvideokamera oder der nachgeschalteten Bildverarbeitungsstufe gelieferten Signale oder die durch die Intensitäts-Transformation optimierten Signale für die Leuchtdichte in jeder Grundfarbe vor der Ermittlung der relativen Farbanteile einer zweidimensionalen ortsabhängigen Hochpaß-, Tiefpaß- oder Bandpaßfilterung unterzogen werden.

18. Verfahren nach einem der Ansprüche 1 bis 17, **dadurch gekennzeichnet, dass** bei der Bewertung eines großflächigen Substrats, beispielsweise einer beschichteten Glasscheibe nach der Beschichtung in einer Durchlaufbeschichtungsanlage, die beschichtete Fläche gleichzeitig mit mehreren Videokameras beobachtet wird, die jeweils einem Teilbereich der beschichteten Fläche zugeordnet sind.

19. Verfahren nach einem der Ansprüche 1 bis 18, **dadurch gekennzeichnet, dass** ein sich über die Breite des Substrats erstreckender streifenförmiger Bereich des beschichteten Substrats erfaßt und ausgewertet wird.

## Claims

1. Method for recognizing and evaluating locally limited defects in a surface layer on a transparent substrate by digital data processing of an image supplied by a video camera, **characterized in that** the coated substrate is illuminated with a broad band light of the visible spectral range and preferably with white light and the video camera used is a colour video camera, and **in that** the digital data processing takes place by detecting, for each image point, the luminance values for each of the three primary colours and by determining, by dividing the luminance values of each primary colour by the sum of the luminance values of the three primary colours, the relative colour fraction for each primary colour in each image point and then by comparing the relative colour fractions with predetermined reference values.

2. Method according to claim 1, **characterized in that**, in the case of an illumination of the surface layer to be evaluated having a locally constant distribution of the light colour fractions, the determined, relative colour fractions are directly compared with the constant, reference set values on the surface of the surface layer.

3. Method according to claim 1, **characterized in that**, in the case of an illumination of the surface layer to be evaluated having a locally varying distribution of the light colour fractions, the relative colour fractions dependent on the location on a substrate of a defect-free surface layer are determined and stored and **in that** the relative colour fractions dependent on the location and determined on the surface layer to be evaluated, are compared with the relative colour fractions dependent on the location and stored as reference set values.

4. Method according to any one of the claims 1 to 3, **characterized in that** the light reflected at the surface layer is recorded and evaluated by the colour video camera.

5. Method according to claim 4, **characterized in that** the coated substrate is illuminated from the side provided with the surface layer.

6. Method according to claim 4, **characterized in that** the coated substrate is illuminated from the side opposite to the surface layer.

7. Method according to any one of the claims 1 to 6, **characterized in that** the coated substrate is illuminated by light directed under an oblique incidence angle, that the light reflected by the surface layer is displayed on a projection screen and that the image reflecting in diffuse manner appearing on the projection screen is detected and evaluated by the colour video camera.

8. Method according to claim 7, **characterized in that** the coated substrate is illuminated under an incidence angle from 0 to 70° and preferably 20 to 60°.

9. Method according to claim 7 or 8, **characterized in that** an opaque screen is used as the projection screen.

10. Method according to claim 7 or 8, **characterized in that** a translucent matt plate is used as the projection screen and the image visible on the matt plate is detected and evaluated as the transmission image.

11. Method according to any one of the claims 1 to 6, **characterized in that** the coated substrate is illuminated with diffuse light and that the light reflected by the surface layer is directly detected and evaluated by the colour video camera.

12. Method according to claim 11, **characterized in that** the detection and evaluation by the colour video camera of the light reflected by the surface layer takes place on a light-absorbing background, preferably a black background.

13. Method according to one of the claims 1 to 12, **characterized in that** the luminance value signals of each image point in each of the primary colours, prior to the determination of the relative colour fractions, are subject to an intensity transformation with a view to an optimum exploitation of the colour contrast.

14. Method according to claim 13, **characterized in that** the intensity transformation of the luminance signals takes place directly on the video signal of the camera prior to the storage of the signals in the image processing system.

15. Method according to claim 13 or 14, **characterized in that** as an intensity transformation is carried out a linear transformation of the intensity interval between the highest brightness value and the lowest value measured over the entire available intensity range of the image memory.

16. Method according to claim 13 or 14, **characterized in that** the known procedure known as "histogram equalization" is used as intensity transformation.

17. Method according to one of the claims 1 to 16, **characterized in that** the signal supplied by the colour video camera or by the image processing stage following the same where the signals optimized by the intensity transformation for the luminance in each primary colour are subject to a high-pass, low-pass or band-pass, bidimensional filtering, which depends on the location prior to the determination of the relative colour fractions.

18. Method according to one of the claims 1 to 17, **characterized in that**, in the case of the evaluation of an extensive substrate, e.g. a coated glass sheet following coating in a continuous coating installation, the coated surface is simultaneously observed with the aid of several video cameras, each being assigned to a partial zone of the coated surface.

19. Method according to one of the claims 1 to 18, **characterized in that** a zone in the form of a strip extending over the width of the coated substrate is detected and evaluated.
